# EUROPEAN PATENT SPECIFICATION

(11) **EP 4 465 429 B1**
(45) Date of publication and mention of the grant of the patent: **08.04.2026**
(21) Application number: 23812218.8
(22) Date of filing: 26.05.2023
(51) Int. Cl.: H01M 50/249, H01M 50/242, H01M 50/244, H01M 50/264, H01M 50/204, H01M 50/211, H01M 50/22

(54) **BATTERY MODULE, AND BATTERY PACK AND VEHICLE INCLUDING THE SAME**
BATTERIEMODUL, UND BATTERIEPACK UND FAHRZEUG MIT DIESEM
MODULE DE BATTERIE, ET PACK DE BATTERIE ET VÉHICULE LUI INCLUANT

(30) Priority: 26.05.2022 KR 20220064703; 27.05.2022 KR 20220065674
(43) Date of publication of application: 20.11.2024
(73) Proprietor: LG Energy Solution, Ltd., Seoul 07335 (KR)
(72) Inventor: SEO, Sung-Won, Daejeon 34122 (KR); YUN, Hyeon-Ki, Daejeon 34122 (KR); JU, Eun-Ah, Daejeon 34122 (KR); TANNENBERGER, Guenter, 85123 Pobenhausen (DE); HARASZTOSI, Uwe, 74172 Neckarsulm (DE)
(74) Representative: Goddar, Heinz J.
(86) International application number: PCT/KR2023/007330
(87) International publication number: WO 2023/229444

(56) References cited:
- WO-A1-2021/024775
- KR-A- 20140 091 104
- KR-A- 20200 111 988
- KR-A- 20200 111 988
- KR-A- 20220 012 038
- KR-A- 20220 012 038
- KR-A- 20220 023 190
- KR-B1- 100 919 390

## Description

### TECHNICAL FIELD

The present disclosure relates to a battery module, and a battery pack and a vehicle including the same, and more specifically, to a battery module having a side plate with a flange portion for connection of the battery module on the side of the battery module, and a battery pack and a vehicle including the same. The present application claims priority to Korean Patent Application No. 10-2022-0065674 filed on May 27, 2022 and Korean Patent Application No. 10-2022-0064703 filed on May 26, 2022.

### BACKGROUND ART

Secondary batteries have high applicability according to product groups and electrical characteristics such as high energy density, and thus are commonly applied not only to portable devices but also to electric vehicles (EVs) or hybrid electric vehicles (HEVs) driven by electric power sources. Such secondary batteries are attracting attention as a new energy source to improve eco-friendliness and energy efficiency in that they have not only a primary advantage of dramatically reducing the use of fossil fuels, but also no by-products generated from the use of energy.

Secondary batteries widely used at present include lithium-ion batteries, lithium polymer batteries, nickel cadmium batteries, nickel hydrogen batteries, nickel zinc batteries and the like. An operating voltage of the unit secondary battery cell, namely a unit battery cell, is about 2.5 V to 4.5 V. Therefore, if a higher output voltage is required, a plurality of battery cells may be connected in series to configure a battery pack. In addition, depending on the charge/discharge capacity required for the battery pack, a plurality of battery cells may be connected in parallel to configure a battery pack. Thus, the number of battery cells included in the battery pack may be variously set according to the required output voltage or the demanded charge/discharge capacity.

Meanwhile, when a plurality of battery cells are connected in series/parallel to configure a battery pack, it is common to first configure a battery module including at least one battery cell and then use this at least one battery module to configure a battery pack by adding other components. Among them, a side plate covering the battery cell from the side plays a role of controlling the swelling of the battery cell and fixing the module, thereby having the most complicated shape among other components and being necessarily obliged to satisfy the required rigidity. Therefore, it is preferable to configure a battery module including a side plate capable of satisfying rigidity required for easier manufacturing. KR20220012038A discloses a battery module according to the preamble of claim 1.

### DISCLOSURE

### Technical Problem

The present disclosure is designed to solve the problems of the related art, and therefore the present disclosure is directed to providing a battery module including a side plate that is easy to manufacture and easily satisfies the required rigidity.

Other objects and advantages of the present disclosure may be understood from the following description and will be more clearly understood by the embodiments of the present disclosure. Also, it will be easily understood that the objects and advantages of the present disclosure may be realized by the means shown in the appended claims and combinations thereof.

### Technical Solution

A battery module according to one aspect of the present disclosure for achieving the above-described object includes a cell assembly having a plurality of battery cells; a module tray configured to support the cell assembly; and a pair of side plates configured to cover one side and the other side of the cell assembly, respectively, wherein at least one of the pair of side plates includes a first sub-plate having a first flange portion protruding outward; and a second sub-plate that has a second flange portion protruding outward and disposed to overlap the first flange portion and is coupled by overlapping the first sub-plate.

At least one of the pair of side plates further includes at least one third sub-plate that is coupled by overlapping the first sub-plate and the second sub-plate and has a third flange portion disposed to overlap the first flange portion and the second flange portion.

In at least one of the pair of side plates, the first sub-plate and the second sub-plate are coupled to each other by laser welding.

The second sub-plate is located further outward than the first sub-plate, and the first flange portion passes through the second sub-plate and overlaps the second flange portion.

The second flange portion has a shape in which a portion of the second sub-plate is cut and bent in a direction toward the outside of the second sub-plate.

The first flange portion passes through the second sub-plate through an opening formed by cutting and bending the second sub-plate and is disposed to overlap the second flange portion.

The first flange portion has a shape in which a portion of the first sub-plate is cut and bent in a direction toward the outside of the first sub-plate.

A bending direction of the first flange portion and a bending direction of the second flange portion may be opposite to each other.

The battery module includes a band member coupled to the pair of side plates.

The band member is disposed on top of the battery module.

At least one end of both ends of the band member is interposed between the first sub-plate and the second sub-plate.

A battery pack according to the present disclosure includes a battery module according to the present disclosure.

A vehicle according to the present disclosure includes a battery module according to the present disclosure.

### Advantageous Effects

According to one aspect of the present disclosure, it is possible to ensure more excellent rigidity so as to cover the cell assembly and fix the module effectively compared to the side plate made of a single member. Therefore, effective cell swelling control and module fixing are possible.

According to another aspect of the present disclosure, without the need to couple a separate member corresponding to the flange portion for fixing the battery module to the side plate, the flange portion has a shape in which a portion of the side plate is cut and bent. Therefore, in a secondary battery where energy density is important, energy density may be increased by reducing the weight of the flange portion member, a separate bonding process for the flange portion member may be omitted, and only a sub-plate having the same shape needs to be produced, thereby facilitating manufacturing and increasing production efficiency.

According to still another aspect of the present disclosure, a single bent portion may be vulnerable to stress in a bending direction and in the opposite direction due to bending, but this may be supplemented to each other by coupling.

According to still another aspect of the present disclosure, the cell assembly may be covered without a separate module cover through the band member.

According to still another aspect of the present disclosure, the band member is interposed between the sub-plates, thereby enabling more stable coupling compared to being simply interposed outside of the side plate.

In addition, several other additional effects may be achieved by various embodiments of the present disclosure. These various effects of the present disclosure will be described in detail in each embodiment, or descriptions of effects that may be easily understood by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 is a perspective view showing the appearance of a battery module according to an embodiment of the present disclosure.
FIG. 2 is an exploded perspective view showing a battery module according to an embodiment of the present disclosure.
FIG. 3 is a view showing an exemplary shape of a side plate according to another embodiment of the present disclosure.
FIG. 4 is a view showing a changing state of an exemplary shape of a side plate according to an embodiment of the present disclosure.
FIG. 5 is a view showing a changing state of an exemplary shape of a sub-plate according to an embodiment of the present disclosure.
FIG. 6 is a view showing a changing state of an exemplary shape of a side plate according to still another embodiment of the present disclosure.
FIG. 7 is a view showing an exemplary shape of a battery module according to still another embodiment of the present disclosure.
FIG. 8 is a view showing a band member included in the battery module of the present disclosure.
FIG. 9 is a view showing an exemplary shape of a battery module according to still another embodiment of the present disclosure.
FIG. 10 is a view showing an exemplary shape of a battery module according to still another embodiment of the present disclosure.
FIG. 11 is a view showing an exemplary shape of a battery pack according to an embodiment of the present disclosure.
FIG. 12 is a view showing an exemplary shape of a battery pack according to another embodiment of the present disclosure.
FIG. 13 is a view schematically showing a vehicle including a battery module according to an embodiment of the present disclosure.

### BEST MODE

The present disclosure will become more apparent by describing preferred embodiments of the present disclosure in detail with reference to the accompanying drawings. The embodiments described herein are shown by way of example to help understanding of the present disclosure, and it should be understood that the present disclosure may be variously modified and implemented differently from the embodiments described herein. In addition, to help understanding of the present disclosure, the accompanying drawings are not illustrated on an actual scale, but the dimensions of some components may be exaggerated.

Although the preferred embodiments of the present disclosure have been shown and described above, the present disclosure is not limited to the above-described specific embodiments, and it is a matter of course that various modifications may be implemented by those who skilled in the art to which the present disclosure appertains without departing from the subject-matter as claimed in the claims, wherein these modifications should not be individually understood from the technical idea or prospect of the present disclosure.

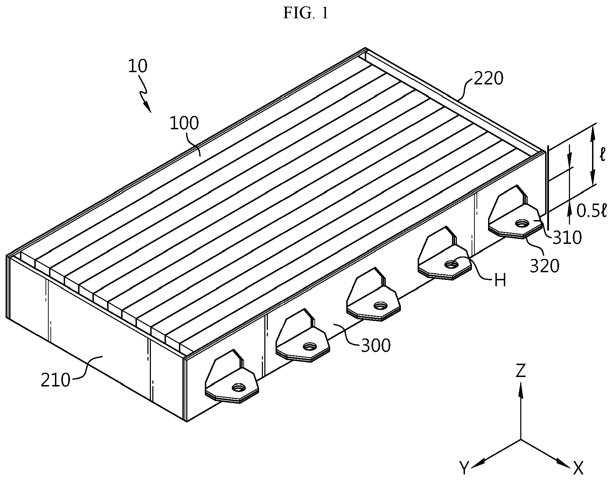

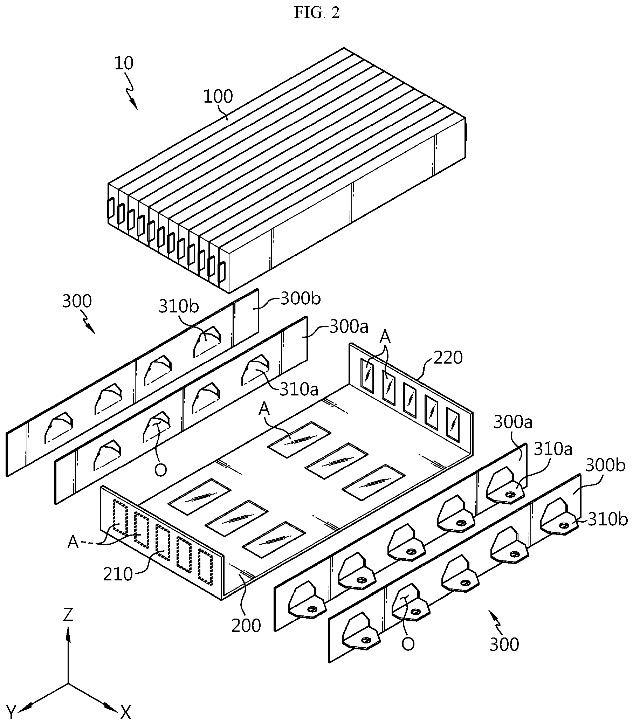

FIG. 1 is a perspective view schematically showing a battery module 10 according to an embodiment of the present disclosure. And, FIG. 2 is an exploded perspective view schematically showing a state in which components of a battery module 10 according to an embodiment of the present disclosure are separated.

Referring to FIGS. 1 and 2, a battery module 10 according to an embodiment of the present disclosure includes a cell assembly 100, a module tray 200, and a pair of side plates 300.

Specifically, the cell assembly 100 may include one or more battery cells. Here, each battery cell may mean a secondary battery. A secondary battery may include an electrode assembly, an electrolyte, and a battery case. However, other types of the secondary battery, such as a cylindrical battery or a prismatic battery, may also be employed in the cell assembly 100 of the present disclosure. The cell assembly 100 may be coupled to, for example, a bus bar frame assembly including a bus bar and a bus bar frame fixing the bus bar, and each of the battery cells included in the cell assembly 100 may be electrically connected by the bus bar.

The module tray 200 may be configured to support the cell assembly 100. It is preferable that the module tray 200 is made of a material capable of absorbing impact so that the cell assembly 100 accommodated therein is not damaged during transportation.

The pair of side plates 300 may be configured to cover one side and the other side (extension direction of the X-axis) of the cell assembly 100, respectively. At least one of the pair of side plates 300 includes a first sub-plate 300a and a second sub-plate 300b. The second sub-plate 300b overlaps and is coupled to the first sub-plate 300a. The first sub-plate 300a has a first flange portion 310a protruding outward, that is, in a direction opposite to the direction toward the cell assembly 100. The second sub-plate 300b has a second flange portion 310b protruding outward, that is, in a direction opposite to the direction toward the cell assembly 100. The second flange portion 310b is disposed to overlap the first flange portion 310a.

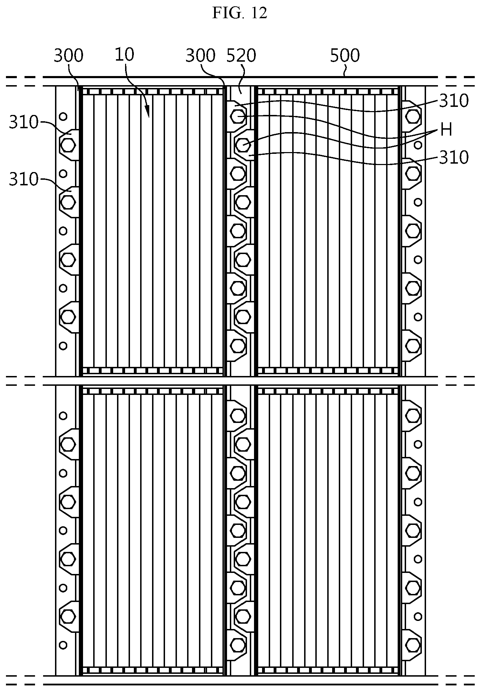

The side plate 300 may be coupled to the module tray 200 substantially perpendicular thereto to cover the cell assembly 100. The first flange portion 310a protruding outward from the side plate 300 positioned substantially perpendicular to the module tray 200 and the second flange portion 310b disposed to overlap the first flange portion 310a may be used for fixing the battery module 10. As such, the side plate 300 including the first sub-plate 300a and the second sub-plate 300b may have greater rigidity compared to the side plate 300 formed of a single member. Therefore, by applying such a side plate 300 structure, the rigidity of the battery module 10 itself may be improved, and on top of that, the swelling control of the battery cell may be effectively performed. In addition, according to the above-described embodiment, the rigidity of the module flange 310 (see FIG. 12) may be improved due to the overlapping structure of the first flange portion 310a and the second flange portion 310b. Thus, when the battery module 10 is fixed to a structure such as a pack tray, it is possible to secure the rigidity of the fixing portion.

The module flange 310 of the side plate 300 may be configured to protrude in a direction away from the cell assembly 100 (in the X-axis direction) at a height 0.51 equal to half of the corresponding height or at a height lower than the height 0.51 equal to half thereof based on the height 1 of the cell assembly 100 (or the height of the side plate 300).

Referring to FIGS. 1 and 2, the battery module 10 may include a front cover 210 and a rear cover 220 for covering both sides of the cell assembly 100 in the longitudinal direction (extension direction of the Y axis). The front cover 210 may cover the front of the cell assembly 100 (positive direction of the Y-axis), and the rear cover 220 may cover the rear of the cell assembly 100 (negative direction of the Y-axis). The front cover 210 and the rear cover 220 may be coupled to the module tray 200 substantially perpendicular thereto to cover the cell assembly 100. In addition, the front cover 210 and the rear cover 220 may also be coupled to the side plate 300 to cover the cell assembly 100. Meanwhile, the front cover 210 and/or the rear cover 220 may also be integrally formed with the module tray 200.

Meanwhile, the battery module 10 may further include a thermal interface material (TIM) layer between the cell assembly 100 and the module tray 200 and/or between the cell assembly 100 and the front cover 210 and/or between the cell assembly 100 and the rear cover 220. The TIM layer may include various thermally conductive materials such as metal, polymer, or ceramic, and the TIM layer may be formed of a gel type or a phase change material.

In this case, the module tray 200 and/or the front cover 210 and/or the rear cover 220 are made of a thermally conductive material and may serve as a heat sink for the corresponding battery module 10.

In particular, the module tray 200 and/or the front cover 210 and/or the rear cover 220 may have a plurality of through holes A formed in a lattice shape. In this case, the plurality of through holes A may be filled with a thermal interface material (TIM) inside each through hole. The TIM may include various thermally conductive materials such as metal, polymer, or ceramic, and may be formed of a gel type or a phase change material.

As such, by applying the module tray 200 and/or the front cover 210 and/or the rear cover 220 having a lattice structure to the battery module 10, the battery module 10 and the battery pack 20 including the same may be further reduced in weight.

The first flange portion 310a and the second flange portion 310b may have a flange hole H for fixing through a fixing member such as a pin or a bolt. In FIG. 1, the flange hole H is shown in a circular shape, but the present disclosure is not necessarily limited to such a shape and number of the flange hole H.

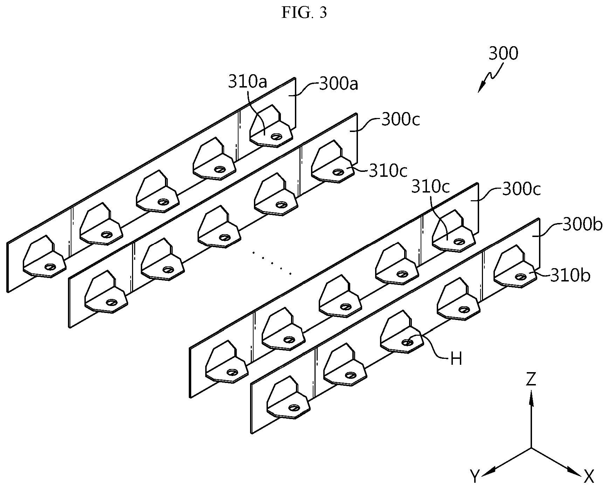

FIG. 3 is a view showing an exemplary shape of a side plate 300 according to another embodiment of the present disclosure.

Referring to FIG. 3, at least one of the pair of side plates 300 may further include at least one third sub-plate 300c in addition to the first sub-plate 300a and the second sub-plate 300b. The third sub-plate 300c may overlap and be coupled to the first sub-plate 300a and the second sub-plate 300b. The third sub-plate 300c may include a third flange portion 310c disposed to overlap the first flange portion 310a and the second flange portion 310b. The at least one third sub-plate 300c may be interposed between the first sub-plate 300a and the second sub-plate 300b to constitute the side plate 300. When a plurality of third sub-plates 300c are provided, the plurality of third flange portions 310c may be disposed to overlap each other, and may also be disposed to overlap the first flange portion 310a and the second flange portion 310b.

According to this embodiment of the present disclosure, when the stiffness of the side plate 300 required in the design of the battery module 10 is insufficient due to the coupling of the first sub-plate 300a and the second sub-plate 300b, it is easy to produce the customized side plate 300 by adding the number of third sub-plates 300c according to the required stiffness.

In at least one of the pair of side plates 300, the first sub-plate 300a and the second sub-plate 300b may be coupled to each other by laser welding. In the present disclosure, as a coupling method between components, not only laser welding, but also various coupling methods such as bolting coupling, ultrasonic welding, and the like may be used. In this case, compared to the case where no separate coupling is performed, it is possible to secure more excellent rigidity to control battery cell swelling and fix the module effectively through the coupling. The first flange portion 310a and the second flange portion 310b may also be coupled by laser welding or the like. In this case, the rigidity of the flange portion may be further improved compared to the case where no separate coupling is performed.

Meanwhile, when at least one of the pair of side plates 300 further includes at least one third sub-plate 300c in addition to the first sub-plate 300a and the second sub-plate 300b, all the sub-plates 300a, 300b, 300c may be coupled to each other by laser welding or the like. Similarly, all the flange portions 310a, 310b, 310c may also be coupled to each other by laser welding or the like.

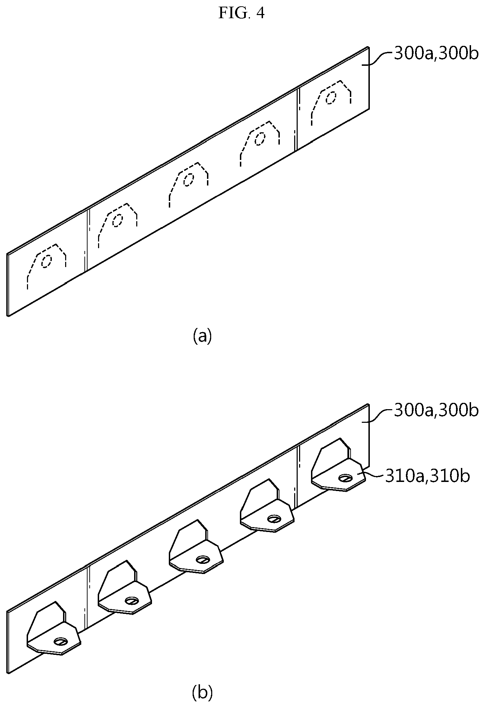

FIG. 4 is a view showing a changing state of an exemplary shape of a side plate 300 according to an embodiment of the present disclosure.

Referring to FIG. 4, the second sub-plate 300b may be positioned further outward than the first sub-plate 300a, and in this case, the first flange portion 310a may pass through the second sub-plate 300b and overlap the second flange portion 310b. For example, the first flange portion 310a provided in the first sub-plate 300a may pass through the opening O formed in the second sub-plate 300b and be seated on the second flange portion 310b to overlap. However, the present disclosure is not limited to the shapes of the flange portions 310a, 310b shown in FIG. 4 and the specific opening O.

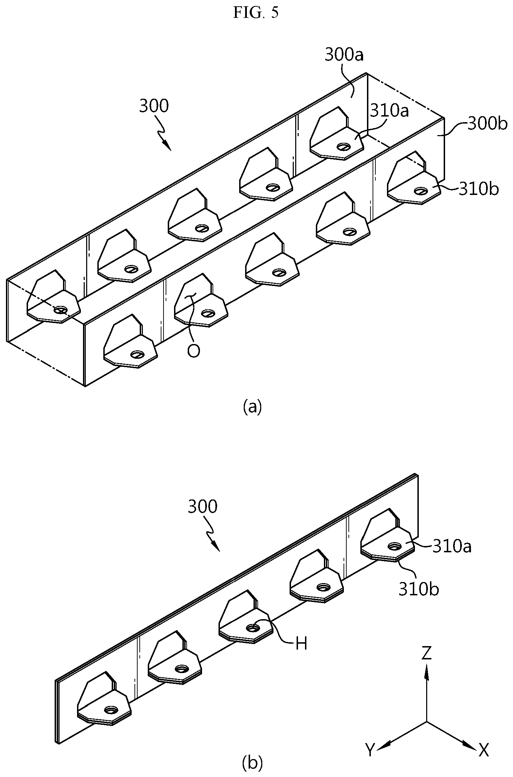

FIG. 5 is a view showing an exemplary shape of sub-plates 300a, 300b according to an embodiment of the present disclosure.

Referring to FIGS. 4 and 5, the second flange portion 310b may have a shape in which a portion of the second sub-plate 300b is cut and bent in a direction toward the outside of the second sub-plate 300b. The first flange portion 310a may be disposed to pass through the second sub-plate 300b through the opening O formed by cutting and bending the second sub-plate 300b and overlap the second flange portion 310b. The first flange portion 310a may have a shape in which a portion of the first sub-plate 300a is cut and bent in a direction toward the outside of the first sub-plate 300a. For example, a portion of the sub-plates 300a, 300b is cut in the shape of the flange portions 310a, 310b by laser processing or press processing as shown in FIG. 5 (a), and then the flange portions 310a, 310b may be formed by bending as shown in FIG. 5 (b). Thereafter, as shown in FIG. 4 (a), the first sub-plate 300a and the second sub-plate 300b may be coupled after the first flange portion 310a of the first sub-plate 300a passes through the second sub-plate 300b through the opening O formed by cutting and bending the second sub-plate 300b and is disposed to overlap the second flange portion 310b. In this case, for smooth coupling between the first sub-plate 300a and the second sub-plate 300b and for accurate overlapping of the first flange portion 310a and the second flange portion 310b, the cut length in the height direction (extension direction of the Z-axis) for forming the first flange portion 310a may be longer than the cut length in the height direction (extension direction of the Z-axis) for forming the second flange portion 310b by approximately the thickness of the second sub-plate 300b. In this case, the flange holes H formed in each of the first flange portion 310a and the second flange portion 310b may exactly overlap each other. However, the present disclosure is not limited by these cutting and bending methods.

According to this configuration of the present disclosure, there is no need to couple a separate member corresponding to the flange portions 310a, 310b for fixing the battery module 10 to the side plate 300. Therefore, manufacturing of the battery module is facilitated, and production efficiency may be increased.

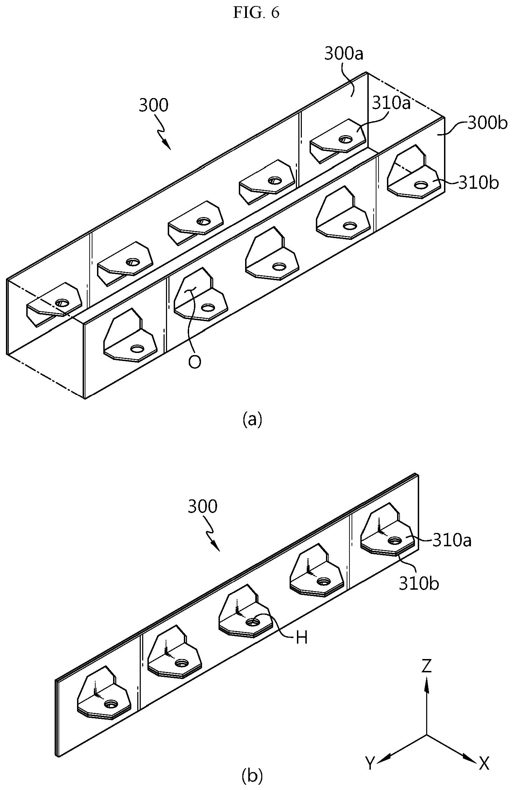

FIG. 6 is a view showing a changing state of an exemplary shape of a side plate 300 according to still another embodiment of the present disclosure. The embodiment shown in FIG. 6 differs from the embodiments shown in FIGS. 4 and 5 in that the bending directions of the first flange portion 310a and the second flange portion 310b are opposite to each other, and the other matters are substantially the same. Therefore, in the following description, portions with differences will be mainly described, and overlapping descriptions will be omitted.

Referring to FIG. 6, the bending direction of the first flange portion 310a and the bending direction of the second flange portion 310b may be opposite to each other. For example, referring to FIG. 6, a portion of the first sub-plate 300a may be cut and then bent upward to form the first flange portion 310a, as shown in FIG. 6 (a). Similarly, a portion of the second sub-plate 300b may be cut and then bent downward to form the second flange portion 310b. The first flange portion 310a may pass through the second sub-plate 300b and overlap the second flange portion 310b, as shown in FIG. 6 (b). However, the present disclosure is not limited by these cutting and bending methods.

A member bent in one direction is vulnerable to a force acting in a direction opposite to the bending direction, and thus may be easily deformed. Therefore, as described above, it is possible to complement each other by overlapping the first flange portion 310a and the second flange portion 310b formed by bending in opposite directions.

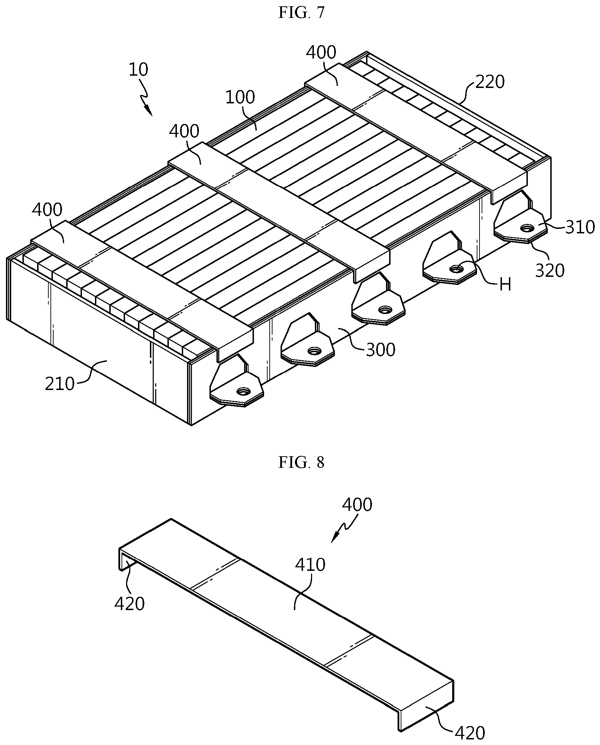

FIG. 7 is a view showing an exemplary shape of a battery module 10 according to still another embodiment of the present disclosure.

Referring to FIG. 7, the battery module 10 may include a band member 400 coupled to a pair of side plates 300. In this case, the band member 400 may cover the cell assembly 100 without a separate module cover. For example, the band member 400 may be disposed on top of the battery module 10.

The band member 400 may be configured to support a pair of side plates 300, with one end in close contact with the side plate 300 covering one side of the cell assembly 100 and the other end in close contact with the side plate 300 covering the other side of the cell assembly 100. To this end, the battery module 10 may include one or two or more band members 300.

The band member 400 may be made of a metal material having elasticity and rigidity.

FIG. 8 is a view showing a band member included in the battery module of the present disclosure.

Referring to FIG. 8, the band member may include a support portion 410 and a pressing portion 420.

The support portion 410 may be configured to have a predetermined width and extend to have a length corresponding to the distance between the pair of side plates.

The pressing portion 420 may be configured to extend from both ends of the support portion 410 in the longitudinal direction and be in close contact with the corresponding side plate among the pair of side plates, respectively. In this case, the pressing portion 420 may be coupled to the corresponding side plate in various ways. For example, the pressing portion 420 may be coupled to the corresponding side plate in a snap-fit manner, coupled using a separate fastening member, or coupled through welding, adhesion, or the like.

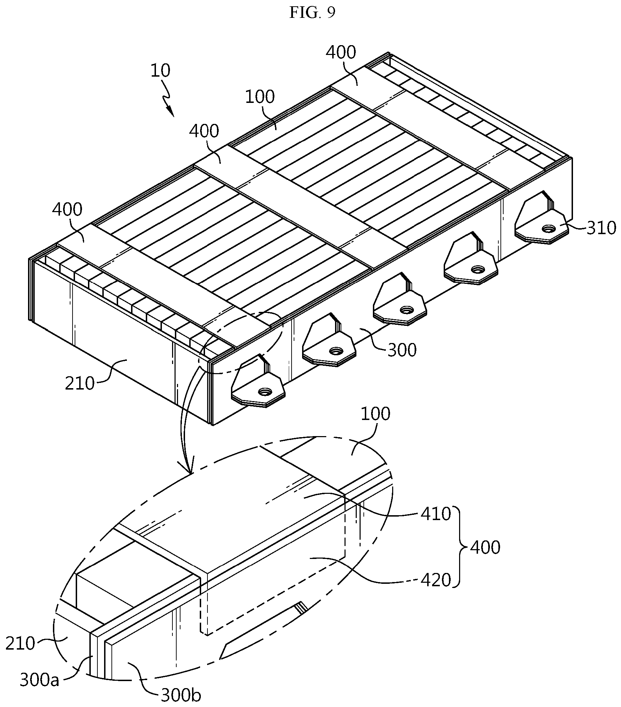

FIG. 9 is a view showing an exemplary shape of a battery module according to still another embodiment of the present disclosure.

Referring to FIG. 9, the pressing portion 420 may be interposed between the first sub-plate 300a and the second sub-plate 300b. For example, one side pressing portion 420 of the band member 400 may be positioned between the first sub-plate 300a and the second sub-plate 300b of the side plate 300 covering one side of the cell assembly 100 and coupled, and the other side pressing portion 420 thereof may be positioned between the first sub-plate 300a and the second sub-plate 300b of the side plate 300 covering the other side of the cell assembly 100 and coupled. However, the present disclosure is not limited to this arrangement and coupling method of the band member 400 and the side plate 300.

The battery module 10 may further include an insulating sheet (not shown) interposed between the cell assembly 100 and the band member 400. In another embodiment, the battery module 10 may further include a buffer pad (not shown) interposed between the cell assembly 100 and the band member 400 to prevent damage to the cell assembly 100 due to contact with the band member 400.

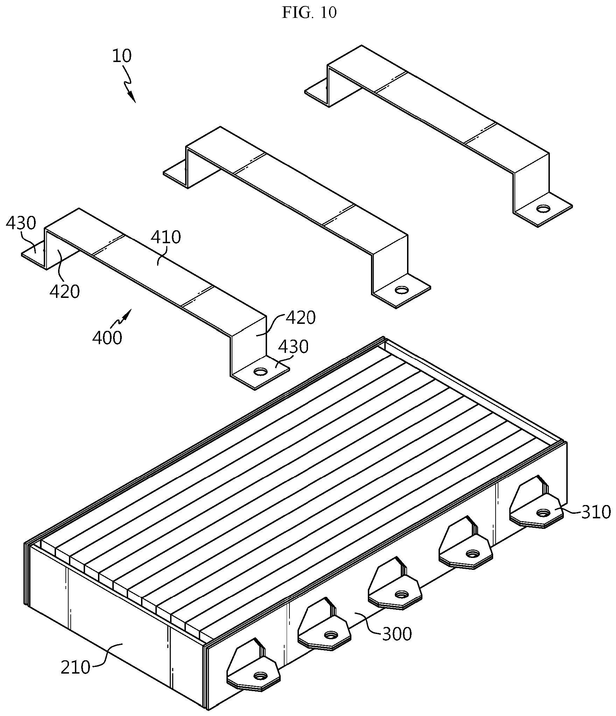

FIG. 10 is a view showing an exemplary shape of a battery module according to still another embodiment of the present disclosure.

Referring to FIG. 10, the band member 400 may include a coupling portion 430.

The coupling portion 430 extends from the pressing portion 420, and may be configured to extend toward the module flange 310 side of the corresponding side plate 300 with which the pressing portion 420 is in close contact to be coupled to a fixing portion 520 of a pack tray 500 to be described later, together with the module flange 310. According to this configuration of the present disclosure, the band member 400 may be interposed between the sub-plates 300a, 300b, thereby enabling more stable coupling compared to simply being interposed on the outer side of the side plate 300.

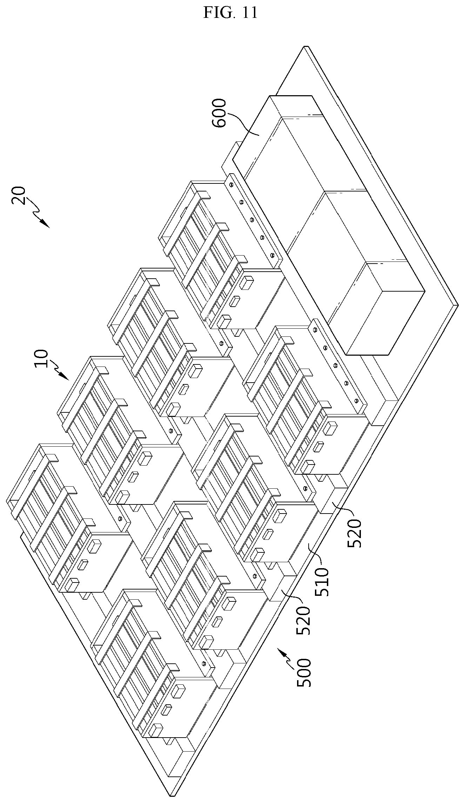

FIG. 11 is a view showing an exemplary shape of a battery pack according to an embodiment of the present disclosure.

Referring to FIG. 11, the battery pack may include a pack tray 500 on which the battery module 10 is seated.

The pack tray 500 may be formed of a metal material, a carbon material, a polymer synthetic resin, or a combination of two or more thereof having rigidity capable of supporting the corresponding battery modules 10 under the load of the battery modules 10.

The pack tray 200 may include a seating portion 510 and a fixing portion 520.

The seating portion 510 may be configured to have a seating surface on which the battery module 10 is seated. The seating portion 510 may be made of a thermally conductive metal material including Al.

The fixing portion 520 may protrude from the upper surface of the pack tray 500 to a predetermined height. The fixing portion 520 may be configured to protrude to a predetermined height from each of both sides of the seating surface on which the battery module 10 is seated and have a step with the corresponding seating surface. The fixing portion 520 may protrude to a height lower than the height of the battery module 10 seated on the corresponding seating surface. The fixing portion 520 may protrude to a height lower than half of the height of the battery module 10 seated on the corresponding seating surface. The fixing portion 520 may be made of a metal material including Al.

The fixing portion 520 may be configured in the form of an extended square beam or square pipe with a certain width and thickness and coupled to the seating portion 510. The fixing portion 520 may have a hollow tube structure.

The seating portion 510 and the fixing portion 520 of the pack tray 500 may be integrally formed. The pack tray 500 is manufactured integrally by applying a casting, sheet metal, or press process to a plastic material, and may be manufactured such that a relatively concave seating portion 510 and a relatively convex fixing portion 520 are formed alternately and repeatedly in one direction on the bottom surface thereof.

The fixing portion 520 may be coupled to the module flanges 310 protruding from each of the side plates 300 on both sides of the battery module 10 seated on the seating surface of the seating portion 510, thereby fixing the battery module 10.

The fixing portion 520 may be coupled respectively to the battery module 10 on both sides of the battery module 10 to fix the corresponding battery module 10, thereby mitigating the corresponding impact even when an impact is applied to the battery pack 20, resulting in protecting the battery module 10 disposed inside the battery pack 20.

The free space secured at the top of the fixing portion 520 may prevent collision between the battery modules 10 even if structural deformation occurs in the battery pack 20, thereby minimizing damage to the battery cells constituting each battery module 10.

The electric unit 600 may include various electronic components that control the charge/discharge operation of the battery modules accommodated in the pack tray 500 or monitor the state of charge (SOC), the state of health (SOH) and the like of each battery module or the battery cells constituting each battery module, and may be accommodated and fixed in the pack tray 500 together with the battery modules.

FIG. 12 is a view showing an exemplary shape of a battery pack according to another embodiment of the present disclosure.

Referring to FIG. 12, the battery pack may include a pack tray 500 on which the battery module 10 is seated. A fixing portion 520 protruding to a predetermined height may be provided on the upper surface of the pack tray 500. The battery module 10 may be coupled to the fixing portion 520 through the module flange 310 formed by overlapping the first flange portion 310a and the second flange portion 310b. The module flange 310 and the fixing portion 520 may be coupled to the flange hole H through a fastening member such as a pin, a bolt, or the like. By making a difference in the number and position of the module flanges 310 of the side plates 300 on both sides of the battery module 10, the module flanges 310 of the side plate 300 on one side may be located between the module flanges 310 of the side plate 300 on the other side. In this case, energy density may be increased by increasing space efficiency in a secondary battery where energy density is important.

Referring to FIG. 12, the battery pack 20 according to an embodiment of the present disclosure may include one or more battery modules 10 according to the present disclosure described above. Also, the battery pack 20 according to the present disclosure may further include other various components in addition to the battery module 10, for example, components of the battery pack known at the time of filing of the present disclosure, such as a BMS, bus bar, pack case, relay, current sensor, and the like.

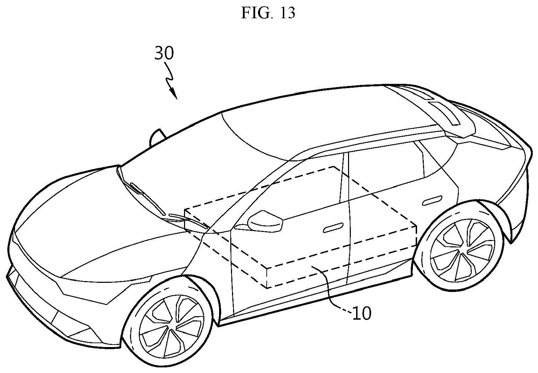

FIG. 13 is a view schematically showing a vehicle including a battery module according to an embodiment of the present disclosure.

Referring to FIG. 13, a vehicle 30 according to an embodiment of the present disclosure may include one or more battery modules 10 according to the present disclosure described above. Also, the vehicle 30 according to the present disclosure may further include other various components included in the vehicle 30 in addition to the battery module 10 or the battery pack 20. For example, the vehicle 30 according to the present disclosure may further include a vehicle body, a motor, and a control device such as an electronic control unit (ECU), and the like, in addition to the battery module according to the present disclosure.

As described above, the present disclosure has been described mainly with preferred embodiments with reference to the accompanying drawings, but it is apparent to those skilled in the art that many and various obvious modifications are possible from this description without departing from the teaching of the present disclosure.

### [Reference Signs]

battery module (10)
battery pack (20)
vehicle (30)
cell assembly (100)
module tray (200)
front cover (210)
rear cover (220)
through hole (A)
side plate (300)
first sub-plate (300a)
second sub-plate (300b)
third sub-plate (300c)
module flange (310)
first flange portion (310a)
second flange portion (310b)
third flange portion (310c)
band member (400)
support portion (410)
pressing portion (420)
coupling portion (430)
pack tray (500)
seating portion (510)
fixing portion (520)
electric unit (600)
flange hole (H)
opening (O)

## Claims

1. A battery module (10), comprising:
a cell assembly (100) having a plurality of battery cells;
a module tray (200) configured to support the cell assembly (100); and
a pair of side plates (300) configured to cover one side and the other side of the cell assembly (100), respectively,
wherein at least one of the pair of side plates (300) comprises:
a first sub-plate (300a) having a first flange portion (310a) protruding outward; and is **characterised by**
a second sub-plate (300b) having a second flange portion (310b) protruding outward and disposed to overlap the first flange portion (310a) and is coupled by overlapping the first sub-plate (300a).

2. The battery module (10) according to claim 1,
wherein the at least one of the pair of side plates (300) further comprises at least one third sub-plate (300c) that is coupled by overlapping the first sub-plate (300a) and the second sub-plate (300b) and has a third flange portion (310c) disposed to overlap the first flange portion (310a) and the second flange portion (310b).

3. The battery module (10) according to claim 1,
wherein in the at least one of the pair of side plates (300), the first sub-plate (300a) and the second sub-plate (300b) are coupled to each other by laser welding.

4. The battery module (10) according to claim 1,
wherein the second sub-plate (300b) is located further outward than the first sub-plate (300a), and the first flange portion (310a) passes through the second sub-plate (300b) and overlaps with the second flange portion (310b).

5. The battery module (10) according to claim 4,
wherein the second flange portion (310b) has a shape in which a portion of the second sub-plate (300b) is cut and bent in a direction toward the outside of the second sub-plate (300b).

6. The battery module (10) according to claim 5,
wherein the first flange portion (310a) passes through the second sub-plate (300b) through an opening (O) formed by cutting and bending the second sub-plate (300b) and is disposed to overlap the second flange portion (310b).

7. The battery module (10) according to claim 5,
wherein the first flange portion (310a) has a shape in which a portion of the first sub-plate (300a) is cut and bent in a direction toward the outside of the first sub-plate (300a).

8. The battery module (10) according to claim 7,
wherein a bending direction of the first flange portion (310a) and a bending direction of the second flange portion (310b) are opposite to each other.

9. The battery module (10) according to claim 1, further comprising:
a band member (400) coupled to the pair of side plates (300).

10. The battery module (10) according to claim 9,
wherein the band member (400) is disposed on top of the battery module (10).

11. The battery module (10) according to claim 10,
wherein at least one end of both ends of the band member (400) is interposed between the first sub-plate (300a) and the second sub-plate (300b).

12. A battery pack (20), comprising:
at least one battery module (10) according to any one of claims 1 to 11.

13. The battery pack (20) according to claim 12, further comprising:
a pack tray (500) on which the at least one battery module (10) is seated.

14. The battery pack (20) according to claim 13, further comprising:
a mounting beam protruding to a predetermined height provided on an upper surface of the pack tray (500),
wherein the battery module (10) is coupled to the mounting beam through a module flange (310) formed by overlapping the first flange portion (310a) and the second flange portion (310b).

15. A vehicle (30), comprising:
at least one battery pack (20) according to claim 12.

## Patentansprüche

1. Batteriemodul (10), umfassend:
eine Zellenanordnung (100) mit einer Vielzahl von Batteriezellen;
ein Modultrog (200) zum Tragen der Zellenanordnung (100); und
ein Paar von Seitenplatten (300) zum Abdecken der einen Seite beziehungsweise der anderen Seite der Zellenanordnung (100),
wobei zumindest eine des Paars von Seitenplatten (300) umfasst:
eine erste Teilplatte (300a), die einen ersten Flanschabschnitt (310a) aufweist, der nach außen vorsteht; und **gekennzeichnet ist durch**
eine zweite Teilplatte (300b) mit einem zweiten Flanschabschnitt (310b), der nach außen vorsteht und zum Überlappen des ersten Flanschabschnitts (310a) angeordnet ist, und durch das Überlappen der ersten Teilplatte (300a) gekoppelt ist.

2. Batteriemodul (10) nach Anspruch 1,
wobei zumindest eine der beiden Seitenplatten (300) ferner zumindest eine dritte Teilplatte (300c) umfasst, die durch Überlappen der ersten Teilplatte (300a) und der zweiten Teilplatte (300b) gekoppelt ist und einen dritten Flanschabschnitt (310c) aufweist, der zum Überlappen des ersten Flanschabschnitts (310a) und des zweiten Flanschabschnitts (310b) angeordnet ist.

3. Batteriemodul (10) nach Anspruch 1,
wobei bei zumindest Paar von Seitenplatten (300) die erste Teilplatte (300a) und die zweite Teilplatte (300b) durch Laserschweißen miteinander verbunden sind.

4. Batteriemodul (10) nach Anspruch 1,
wobei die zweite Teilplatte (300b) weiter außen angeordnet ist als die erste Teilplatte (300a), und wobei der erste Flanschabschnitt (310a) durch die zweite Teilplatte (300b) hindurchgeht und den zweiten Flanschabschnitt (310b) überlappt.

5. Batteriemodul (10) nach Anspruch 4,
wobei der zweite Flanschabschnitt (310b) eine Form aufweist, bei der ein Abschnitt der zweiten Teilplatte (300b) geschnitten und in einer Richtung zur Außenseite der zweiten Teilplatte (300b) hin gebogen ist.

6. Batteriemodul (10) nach Anspruch 5,
wobei der erste Flanschabschnitt (310a) durch die zweite Teilplatte (300b) durch eine Öffnung (O) hindurchgeht, die durch Schneiden und Biegen der zweiten Teilplatte (300b) gebildet ist, und so angeordnet ist, dass er den zweiten Flanschabschnitt (310b) überlappt.

7. Batteriemodul (10) nach Anspruch 5,
wobei der erste Flanschabschnitt (310a) eine Form aufweist, bei der ein Abschnitt der ersten Teilplatte (300a) geschnitten und in einer Richtung zur Außenseite der ersten Teilplatte (300a) hin gebogen ist.

8. Batteriemodul (10) nach Anspruch 7,
wobei eine Biegerichtung des ersten Flanschabschnitts (310a) und eine Biegerichtung des zweiten Flanschabschnitts (310b) entgegengesetzt zueinander sind.

9. Batteriemodul (10) nach Anspruch 1, ferner umfassend:
ein Bandelement (400), das mit dem Paar von Seitenplatten (300) verbunden ist.

10. Batteriemodul (10) nach Anspruch 9,
wobei das Bandelement (400) auf der Oberseite des Batteriemoduls (10) angeordnet ist.

11. Batteriemodul (10) nach Anspruch 10,
wobei zumindest ein Ende der beiden Enden des Bandelements (400) zwischen der ersten Teilplatte (300a) und der zweiten Teilplatte (300b) angeordnet ist.

12. Batteriepack (20), umfassend:
zumindest ein Batteriemodul (10) nach einem der Ansprüche 1 bis 11.

13. Batteriepack (20) nach Anspruch 12, ferner umfassend:
einen Packträger (500), auf dem das zumindest eine Batteriemodul (10) sitzt.

14. Batteriepack (20) nach Anspruch 13, ferner umfassend:
einen Montageträger, der bis zu einer vorbestimmten Höhe vorsteht und an einer oberen Fläche des Packträgers (500) vorgesehen ist,
wobei das Batteriemodul (10) durch einen Modulflansch (310), der durch Überlappen des ersten Flanschabschnitts (310a) und des zweiten Flanschabschnitts (310b) gebildet wird, mit dem Montageträger verbunden ist.

15. Fahrzeug (30), umfassend:
zumindest ein Batteriepack (20) nach Anspruch 12.

## Revendications

1. Module de batterie (10) comprenant :
un ensemble d'éléments (100) comprenant une pluralité d'éléments de batterie ;
un plateau de module (200) configuré pour supporter l'ensemble d'éléments (100) ; et
une paire de plaques latérales (300) configurées pour couvrir un côté et l'autre côté de l'ensemble d'éléments (100) respectivement,
au moins une de la paire de plaques latérales (300) comprenant :
une première sous-plaque (300a) comprenant une première partie de bride (310a) saillante vers l'extérieur ; et **caractérisé par**
une deuxième sous-plaque (300b) possédant une deuxième partie de bride (310b) saillante vers l'extérieur, disposée pour chevaucher la première partie de bride (310a), et couplée en chevauchant la première sous-plaque (300a).

2. Module de batterie (10) selon la revendication 1,
l'au moins une de la paire de plaques latérales (300) comprenant en outre au moins une troisième sous-plaque (300c) couplée en chevauchant la première sous-plaque (300a) et la deuxième sous-plaque (300b) et possédant une troisième partie de bride (310c) disposée pour chevaucher la première partie de bride (310a) et la deuxième partie de bride (310b).

3. Module de batterie (10) selon la revendication 1,
dans l'au moins une de la paire de plaques latérales (300), la première sous-plaque (300a) et la deuxième sous-plaque (300b) étant couplées l'une à l'autre par soudage laser.

4. Module de batterie (10) selon la revendication 1,
la deuxième sous-plaque (300b) étant située plus à l'extérieur que la première sous-plaque (300a), et la première partie de bride (310a) passant à travers la deuxième sous-plaque (300b) et chevauchant la deuxième partie de bride (310b).

5. Module de batterie (10) selon la revendication 4,
la deuxième partie de bride (310b) ayant une forme dans laquelle une partie de la deuxième sous-plaque (300b) est découpée et pliée dans une direction vers l'extérieur de la deuxième sous-plaque (300b).

6. Module de batterie (10) selon la revendication 5,
la première partie de bride (310a) passant à travers la deuxième sous-plaque (300b) à travers une ouverture (O) formée en découpant et en pliant la deuxième sous-plaque (300b), et étant disposée de façon à chevaucher la deuxième partie de bride (310b).

7. Module de batterie (10) selon la revendication 5,
la première partie de bride (310a) ayant une forme dans laquelle une partie de la première sous-plaque (300a) est découpée et pliée dans une direction vers l'extérieur de la première sous-plaque (300a).

8. Module de batterie (10) selon la revendication 7,
le sens du pliage de la première partie de bride (310a) et le sens du pliage de la deuxième partie de bride (310b) se faisant face.

9. Module de batterie (10) selon la revendication 1, comprenant en outre:
un élément de bande (400) couplé à la paire de plaques latérales (300).

10. Module de batterie (10) selon la revendication 9,
l'élément de bande (400) étant disposé au-dessus du module de batterie (10).

11. Module de batterie (10) selon la revendication 10,
au moins un bout des deux bouts de l'élément de bande (400) étant intercalé entre la première sous-plaque (300a) et la deuxième sous-plaque (300b).

12. Bloc-batterie (20), comprenant :
au moins un module de batterie (10) selon une quelconque des revendications 1 à 11.

13. Bloc-batterie (20) selon la revendication 12, comprenant en outre:
un plateau de bloc (500) sur lequel est placé l'au moins un module de batterie (10).

14. Bloc-batterie (20) selon la revendication 13, comprenant en outre:
une poutre de montage saillante à une hauteur prédéterminée, agencée sur une surface supérieure du plateau de bloc (500),
le module de batterie (10) étant couplé à la poutre de montage par le biais d'une bride du module (310) formée en chevauchant la première partie de bride (310a) et la deuxième partie de bride (310b).

15. Véhicule (30), comprenant :
au moins un bloc-batterie (20) selon la revendication 12.
